# EUROPEAN PATENT APPLICATION

(11) **EP 2 554 575 A2**
(43) Date of publication of application: **06.02.2013**
(21) Application number: 11763048.3
(22) Date of filing: 31.03.2011
(51) Int. Cl.: C08J 5/18, C08G 69/40, B29D 30/30, C08L 77/00, B60C 5/14

(54) **FILM FOR A TYRE INNER LINER AND A PRODUCTION METHOD THEREFOR**

(30) Priority: 30.03.2011 KR 20110028996; 30.03.2011 KR 20110028995; 31.03.2010 KR 20100029492; 31.03.2010 KR 20100029493
(71) Applicant: Kolon Industries, Inc., Gwacheon-si, Gyeonggi-do 427-709 (KR)
(72) Inventor: CHUNG, Il, Gumi-si Gyeongsangbuk-do 730-030 (KR); JEON, Ok-Hwa, Gyeongsan-si Gyeongsangbuk-do 712-903 (KR); LEE, Sang-Mok, Gumi-si Gyeongsangbuk-do 730-020 (KR); KIM, Gi-Woong, Daegu 706-010 (KR)
(74) Representative: TER MEER - STEINMEISTER & PARTNER GbR
(86) International application number: PCT/KR2011/002229
(87) International publication number: WO 2011/122876

(57) **Abstract**

This invention relates to a film for a tire inner liner, which includes a copolymer including a polyamide-based segment and 5 ∼ 50 wt% of a polyether-based segment relative to the total weight of the film, and has a thickness 30 ∼ 300 *µ*m, and to a method of manufacturing the film for a tire inner liner, including polymerizing a polyamide-based resin or its precursor with 5∼50 wt% of a polyether-based resin relative to the total weight of the film, thus preparing a copolymer, and melting and extruding the copolymer, thus forming a film.

## Description

### TECHNICAL FIELD

The present invention relates to a film for a tire inner liner and a method of manufacturing the same, and more particularly, to a film for a tire inner liner which may exhibit superior airtightness despite being thin, thus enabling lightness of a tire and higher fuel efficiency of vehicles, and also showing superior moldability in a tire manufacturing process, and to a method of manufacturing the same.

### BACKGROUND OF THE ART

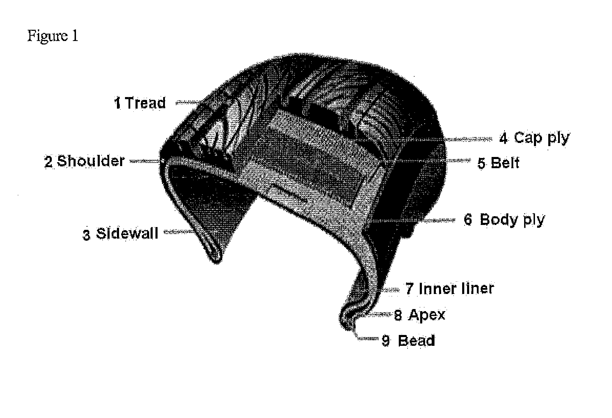

Tires support loads of vehicles, absorb impact from a road surface, and deliver driving force or braking force of vehicles on the ground. Typically, a tire is formed with a composite of fiber/steel/rubber, and is configured as illustrated in FIG. 1.

A tread 1 is put in contact with the road surface, and applies frictional force necessary for braking or driving and has to exhibit good wear resistance, high external impact resistance, and low heat generation.

A body ply (or carcass) 6 is a cord layer inside a tire, and supports loads, endures impact, and needs high fatigue resistance to bending movement during vehicle service.

A belt 5 is positioned on the body ply, and is mainly composed of steel wire and mitigates external impact and makes a ground plane of a tread large, thus obtaining high driving stability.

A sidewall 3 is referred to as a rubber layer from the lower surface of a shoulder 2 to a bead 9, and protects the body ply 6 therein.

An inner liner 7 is positioned inside a tire instead of a tube, and prevents air from leaking thus enabling a pneumatic tire.

A bead 9 is a rectangular or hexagonal wire bundle obtained by coating steel wire with rubber and functions to hold a tire on a rim.

A cap ply 4 is a specific cord positioned on the belt of a radial tire for some vehicles, and minimizes movement of the belt while driving.

An apex 8 is a triangular rubber filler, which minimizes the dispersion of the bead, mitigates external impact to protect the bead and prevents the introduction of air upon molding.

Recently, tubeless tires have typically been used in which air at a high pressure of about 30 - 40 psi is injected without the use of a tube, and an inner liner having high airtightness is disposed at the inner layer of the carcass to prevent internal air from being discharged to the outside during vehicle service.

In the past, a tire inner liner was used, which is composed mainly of rubber including butyl rubber or halo butyl rubber having comparatively low air permeability. Such an inner liner had to be manufactured in such a manner that the amount of rubber or the thickness of an inner liner was increased to obtain sufficient airtightness. Accordingly, situations such as the total weight of a tire being increased, fuel efficiency of vehicles being decreased, and an air pocket being formed between the inner rubber of the carcass layer and the inner liner during tire vulcanization or vehicle service or the shape or properties of the inner liner being deteriorated occurred.

Hence, a variety of attempts have been made to decrease the thickness and weight of the inner liner to reduce fuel consumption and to decrease changes in shape or properties of the inner liner during tire vulcanization or vehicle service.

However, no conventionally known method can sufficiently maintain superior air permeability and tire moldability while reducing the thickness and weight of the inner liner as desired. Furthermore, there are many cases where the inner liner obtained using the conventional method has cracked due to repeated deformation in a tire manufacturing process or during vehicle service and the like, undesirably resulting in low fatigue resistance.

Therefore, the development of a tire inner liner which may be formed to be thinner so as to achieve lightness of a tire and superior properties including airtightness or moldability is required.

### DETAILED DESCRIPTION OF THE INVENTION

### TECHNICAL OBJECTIVES

Accordingly, an object of the present invention is to provide a film for a tire inner liner which may exhibit superior airtightness even at a thin thickness, thus achieving the lightness of a tire and higher fuel efficiency of a vehicle and also showing high moldability in a tire manufacturing process.

Another object of the present invention is to provide a method of manufacturing the film for a tire inner liner.

### TECHNICAL SOLUTIONS

The present invention provides a film for a tire inner liner, which includes a copolymer including a polyamide-based segment and 5∼50 wt% of a polyether-based segment relative to the total weight of the film, and has a thickness of 30 - 300 µm.

In addition, the present invention provides a method of manufacturing the film for a tire inner liner, including polymerizing a polyamide-based resin or its precursor with 5∼50 wt% of a polyether-based resin relative to the total weight of the film thus preparing a copolymer and melting and extruding the copolymer, thus forming a film.

Below is a detailed description of a film for a tire inner liner and a method of manufacturing the same according to specific embodiments of the present invention.

According to an embodiment of the invention, a film for a tire inner liner is provided, which includes a copolymer including a polyamide-based segment and 5∼50 wt% of a polyether-based segment relative to the total weight of the film, and has a thickness of 30∼ 300 µm.

The present inventors have ascertained that a film for a tire inner liner formed by copolymerizing a polyamide-based segment and a polyether-based segment in a specific amount may exhibit superior airtightness and high internal pressure retention performance even at a thin thickness, and may be easily elongated or deformed even when a modest force is applied upon tire molding, thereby ensuring superior moldability, which culminated in the present invention.

Also, the film for a tire inner liner does not significantly need a rubber component or an additive to improve properties, thus simplifying the manufacturing process and reducing the tire manufacturing cost Thus, when the film for a tire inner liner according to the embodiment of the invention is used, the tire may be made light thus increasing vehicle fuel efficiency, and appropriate internal pressure retention may be ensured even after extended use, thus preventing low fuel efficiency and rollover accidents due to low internal pressure. Furthermore a tire having superior performance may be manufactured via a simple manufacturing process.

The film for a tire inner liner including the copolymer of the polyamide-based segment and the polyether-based segment may consist essentially of the copolymer as a base of the film. Accordingly, the film for an inner liner is different from a conventional film for a tire inner liner including a base composed mainly of a rubber-type component or a thermoplastic resin, and does not need an additional vulcanizer. The base of the film means a substrate of a resin or rubber which maintains the shape of a films, except for additional dispersion components such as additives, etc., in the film for a tire inner liner. In the past, there were many cases where the base of the film included a variety of rubber or resin components. However, the film for a tire inner liner according to the embodiment of the invention may include a polyamide-based resin or the like in addition to the above copolymer as the base, but may include only the above copolymer. In this case, another resin or rubber component is not substantially included

Meanwhile, the characteristics of the films for a tire inner liner are exhibited by copolymerizing the polyamide-based segment with the polyether-based segment for imparting elastomeric properties in a specific amount range. The polyamide-based segment may exhibit superior airtightness due to its intrinsic molecular chain properties, for example, airtightness of about 10∼20 times as high as that of butyl rubber or the like typically used in tires at the same thickness, and may also manifest modulus characteristics that are not as high compared to the other resins. The polyamide-based segment and 5∼50 wt% of the polyether-based segment relative to the total weight of the film are copolymerized, and thereby the film for a tire inner liner may exhibit low modulus characteristics or may generate a comparatively low load under specific elongation conditions, and the properties of the film do not remarkably change even after specific heat treatment. Further, changes in structure thereof due to crystallization or the like of a polyamide component may be suppressed, thereby increasing durability against tire deformation.

Accordingly, the film for an inner liner may be elongated or deformed so as to suit the shape of a tire even when a modest force is applied upon tire molding, thus exhibiting superior tire moldability. Because the film for a tire inner liner may exhibit the above characteristics even when the amount of the polyether-based segment is not greatly increased, this film may manifest high airtightness and low air permeability which are intrinsic of the polyamide-based segment

Concretely, the film for a tire inner liner may generate a load of 0.5∼4 kgf upon 100 % elongation at room temperature, and may generate a load of 1∼5 kgf upon 200 % elongation at room temperature. When the film for a tire inner liner is elongated to 100 % or 200 % at room temperature, if an excessive load is generated, it is difficult to produce an appropriate tire shape at a low molding pressure of a tire molding machine, thereby causing processing problems of the shape of the molded green tire being distorted or the film being torn. Also, in the case where the film for a tire inner liner generates too great a load upon predetermined elongation at room temperature, even if a tire is manufactured using different molding machines or processes, an external force such as severe tension or compressive strain may be intensively applied to the specific region of the film during vehicle service because of the rigidity of the film, undesirably causing quality problems of products in which the film may crack or the film itself may be torn.

Also, in the film for an inner liner, a load generated upon 100 % elongation after heat treatment at 180 °C for 10 min may be less than or equal to two times a load generated upon 100 % elongation at room temperature. In the above film for an inner liner, if the load generated upon 100 % elongation after heat treatment at 180 °C for 10 min is greater than two times the load generated upon 100 % elongation at room temperature, the inner liner is not sufficiently stretched even in the presence of expansion pressure, and thus the appearance of the molded green tire may become poor. Also, rigidity may increase drastically after heat treatment, ultimately making it difficult to mold a tire. Upon elongation, the load generated in the film for a tire inner liner may be measured as Max_{load} in the 100 % elongation zone in a MD (machine direction) of the film.

The tire inner liner may generate a load of 6 kgf or less upon 100 % elongation after heat treatment at 180 °C for 10 min. That is, upon tire molding, the tire inner liner may maintain appropriate mechanical properties and elasticity even after heat treatment, and thus even when a modest force is applied, the film may be easily elongated or deformed. Even after tire molding, stable properties may be exhibited in the tire, and also stable properties may be ensured under an external force such as severe tension or compressive strain during vehicle service, thus increasing tire durability.

Typically, a polyamide-based resin is known to be easily crystallized by heat, but the film for a tire inner liner includes a specific amount of the polyether-based segment and thus may suppress the growth of crystals due to heat or external deformation in the film. The film for an inner liner is not easily crystallized even by heat generated in the tire, and modulus or rigidity is not greatly changed even by extended service, and cracking may be minimized during service.

In a method of manufacturing the film for a tire inner liner which will be described later, the film for a tire inner liner is manufactured into a non-oriented or non-stretched film by using a method of maximally suppressing orientation of a film, for example, by adjusting viscosity via optimization of a melting extrusion temperature, changing a die size, or adjusting a winding speed. Hence, even when the amount of the polyether-based segment is not so high in the film, superior mechanical properties and moldability may be ensured.

The film for a tire inner liner may have a thickness of 30∼300 *µ*m, preferably 40∼250 *µ*m, and more preferably x40 ∼ 200 *µ*m. The film for a tire inner liner is thinner than a conventionally known inner liner film, but may have lower air permeability, for example, oxygen permeability of 200 cc/(m²·24 h·atm) or less.

The polyamide-based segment indicates a repeating unit containing an amide group (-CONH-), and may be formed from a polyamide-based resin or its precursor which participates in a polymerization reaction.

Because the polyamide-based segment has sufficient heat resistance and chemical stability, it may prevent the deformation or degeneration of the film for an inner liner when exposed to high-temperature conditions or chemicals such as additives and so on in the tire manufacturing process. As the polyamide-based segment is copolymerized with the polyether-based segment, it may have comparatively high reactivity to an adhesive (e.g., a resorcinol-formalin-latex (RFL)-based adhesive), so that the film for an inner liner may be easily adhered to a carcass portion.

Specifically, the polyamide-based segment may be a main repeating unit of any one polyamide-based resin selected from the group consisting of nylon 6, nylon 66, nylon 46, nylon 11, nylon 12, nylon 610, nylon 612, a nylon 6/66 copolymer, a nylon 6/66/610 copolymer, nylon MXD6, nylon 6T, a nylon 6/6T copolymer, a nylon 66/PP copolymer, a nylon 66/PPS copolymer, a methoxymethylate of 6-nylon, a methoxymethylate of 6-610-nylon, and a methoxymethylate of 612-nylon. For example, the main repeating unit of nylon 6 is known to be the following Chemical Formula 1 in which R₁ is a C6 alkylene, and the main repeating unit of the other polyamide-based resin is apparently known to those skilled in the art.

The polyamide-based segment may include a repeating unit represented by Chemical Formula 1 or 2 below.

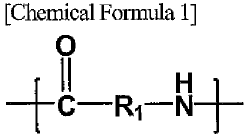

In Chemical Formula 1, R₁ may be a C1∼20 linear or branched alkylene group or a C7∼20 liner or branched arylalkylene group.

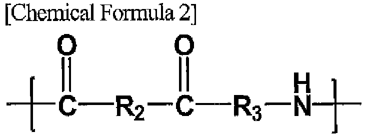

In Chemical Formula 2, R₂ may be a C1∼20 linear or branched alkylene group, and R₃ may be a C1∼20 linear or branched alkylene group or a C7∼20 liner or branched arylalkylene group.

As used herein, an alkylene group means a divalent functional group derived from an alkyl group, and an arylalkylene group means a divalent functional group derived from an alkyl group introduced with an aryl group.

On the other hand, the polyether-based segment indicates a repeating unit containing an alkyl oxide (-alkyl-O-) group, and may be formed from a polyether-based resin or its precursor which participates in a polymerization reaction.

The polyether-based segment may suppress the growth of large crystals in the film for a tire inner liner or may prevent the film from easily breaking in the tire manufacturing process or during vehicle service. Also, the polyether-based segment may further decrease a modulus of the film for a tire inner liner or a load generated upon elongation, and thus, even when a modest force is applied upon tire molding, the film may be elongated or deformed so as to suit the shape of a tire, making it easy to form a tire. The polyether-based segment may suppress an increase in the rigidity of a film at a low temperature and may prevent crystallization at a high temperature, and may also prevent damage or tearing of the inner liner film due to repeated deformation or the like. Moreover, this segment may increase deformation resilience of the inner liner, and thus suppresses wrinkling of the film due to permanent deformation thereby increasing durability of the tire or the inner liner.

The polyether-based segment may be a main repeating unit which may be contained in a polyalkylene glycol resin or its derivative, and the polyalkylene glycol derivative may be a derivative in which the terminal of a polyalkylene glycol resin is substituted with an amine group, a carboxylic group, or an isocyanate group, particularly an amine group. Preferably, the polyether-based segment may be a main repeating unit contained in any one polyether-based resin selected from the group consisting of polyethylene glycol, polypropylene glycol, polytetramethylene glycol, polyoxyethylene diamine, polyoxypropylene diamine, polyoxytetramethylene diamine, and copolymers thereof

Specifically, the polyether-based segment may include a repeating unit represented by Chemical Formula 5 below.

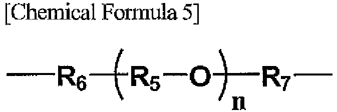

In Chemical Formula 5, R₅ may be a C1∼10 linear or branched alkylene group, and n may be an integer between 1 and 100. Furthermore, R₆ and R₇ may be the same as or different from each other, and are individually a direct bond, -O-, -NH-, -COO-, or -CONH-.

In the manufacturing method which will be described later, the copolymer of the polyamide-based segment and the polyether-based segment may be obtained by polymerizing a polyamide-based resin or its precursor with a polyether-based resin. As such, the polyether-based resin may have a weight average molecular weight of 500∼10,000, and preferably 1000 - 3000. If the weight average molecular weight of the polyether-based resin is less than 500, the polyether-based resin may not appropriately function to suppress growth of large crystals in the film for a tire inner liner or to decrease a modulus. In contrast, if the weight average molecular weight thereof is greater than 10,000, the airtightness of the inner liner may decrease. Such a weight average molecular weight may be measured using a typically known device and method, for example, GC-MS or GPC (gel permeation chromatography).

The polyether-based segment may be contained in an amount of 5 - 50 wt%, and preferably 10 - 30 wt%, relative to the total weight of the film. Thus, the film for a tire inner liner may include 50∼95 wt% of a component, for example, a polyamide-based component, the other component, or an additive, in addition to the polyether-based segment.

If the amount of the polyether-based segment is less than 5 wt% relative to the total weight of the film, the modulus of the film for a tire inner liner or the load generated upon elongation may remarkably increase, undesirably lowering tire moldability or considerably deteriorating the properties due to repeated deformation. In contrast, if the amount of the polyether-based segment is greater than 50 wt% relative to the total weight of the film, airtightness of the film for a tire inner liner may decrease, and reactivity to an adhesive may decrease, making it difficult to adhere the inner liner to the carcass layer and also to manufacture a uniform film because of greatly increased elasticity of the inner liner.

If the amount of the polyamide-based segment is very small, the density or airtightness of the film for a tire inner liner may decrease. In cnntrast, if the amount thereof is excessively large, the modulus of the film for a tire inner liner may extremely increase or tire moldability may decrease, and also the inner liner may be crystallized under high-temperature conditions in the tire manufacturing process or during vehicle service, and the film for an inner liner may crack due to repeated deformation.

Meanwhile, the film for a tire inner liner may be a non-stretched film. In the case where the film for a tire inner liner is a non-stretched film, it may exhibit low modulus and a high deformation rate and thus may be appropriately applied to a tire molding process which generates high expansion. Furthermore, because crystallization rarely occurs in the non-stretched film, damage such as cracking may be prevented even by repeated deformation. The non-stretched film does not have greater variations in properties and orientation in a specific direction, and thus an inner liner having uniform properties may be obtained In the case where the film for a tire inner liner is a non-stretched film, it may be provided in cylindrical form or sheet form in the tire manufacturing process. When the film for a tire inner liner is in sheet form, there is no need to separately construct a film manufacturing device so as to suit different tire sizes, and during transport and storage, wrinkling and impact applied to the film may be minimized. Also, in the case where the film for an inner liner is provided in sheet form, an adhesive may be easily applied, and damage or distortion during the manufacturing process because of a difference in size from a molding drum may be prevented.

As illustrated in FIG. 1, the film for a tire inner liner is thinner than the conventional film for an inner liner, but may exhibit superior airtightness. Concretely, the film for an inner liner of the invention may exhibit higher airtightness at the same thickness as in a conventional inner liner made of halobutyl rubber, and much higher airtightness compared to natural rubber. Also, a typical nylon 6 stretched film may show high airtightness, but its properties may decrease or deteriorate in a tire manufacturing process or during vehicle service. However, the film for a tire inner liner of the invention manifests superior airtightness and insignificant changes in properties or shape thereof and may increase tire moldability. In FIG.. 1, the horizontal axis designates the film thickness in a log scale and the vertical axis designates oxygen permeability (OTR), wherein NR is natural rubber, Nylon Film is a typical nylon 6 stretched film, Inner liner Rubber #1 and #2 are tire inner liners using halobutyl rubber, and Inner liner Film is a film for a tire inner liner according to an embodiment of the invention.

Meanwhile, the film for a tire inner liner of the invention may exhibit enhanced adhesive force because of including the copolymer of the polyamide-based segment and the polyether-based segment, thus obviating a need for an additional adhesive layer or rubber layer to ensure firm adhesion to the carcass layer. The film for a tire inner liner may be adhered to the inner surface of carcass using a typical adhesive used in the tire manufacturing process. Particularly useful is a resorcinol-formalin-latex (RFL)-based adhesive in terms of more uniform and stable adhesion.

Accordingly, the film for a tire inner liner may further include an adhesive layer formed on at least one surface thereof, and such an adhesive layer may include a resorcinol-formalin-latex (RFL)-based adhesive as mentioned above. This adhesive layer may be formed using a typical adhesive layer composition including the resorcinol-formalin-latex (RFL)-based adhesive or an adhering method. The film for a tire inner liner including such an adhesive layer may satisfy properties according to the embodiment of the invention, for example, low air permeability and low load generated upon predetermined elongation. Furthermore, the adhesive layer may have a thickness of 20 *µ*m or less, and preferably 0.1∼10 *µ*m, and may be formed on either or both surfaces of the film for a tire inner liner.

Also, the film for a tire inner liner may further include a polyamide-based resin to improve mechanical properties or airtightness. Such a polyamide-based resin may be provided in the form of being mixed or copolymerized with the copolymer of the polyamide-based segment and the polyether-based segment on the film. As mentioned in the following manufacturing method, the polyamide-based resin is mixed with the copolymer of the polyamide-based segment and the polyether-based segment, melted, and extruded, and thereby may be included in the film for a tire inner liner.

The polyamide-based resin which may be additionally included may be used to enhance mechanical properties of the film for a tire inner liner, for example, heat resistance or chemical stability and airtightness. If it is used in too great an amount, the characteristics of the resulting film for a tire inner liner may deteriorate. Even though the polyamide-based resin is additionally used, the amount of the polyether-based segment in the film has to be maintained to the extent of 5∼50 wt%, so that the sum of the polyamide-based resin, the polyamide-based segment, and the other adhesive is 50∼95 wt%.

The polyamide-based resin which is additionally usable is not particularly limited, and preferably useful is a polyamide-based resin including a repeating unit which is the same as or similar to that of the polyamide-based segment in order to increase compatibility with the copolymer.

The polyamide-based resin may have a relative viscosity of 2.5∼4.0. If the relative viscosity is less than 2.5, toughness may decrease and thus sufficient elongation is not ensured, undesirably causing breakage upon tire manufacturing or during vehicle service. In contrast, if the relative viscosity is greater than 4.0, modulus or viscosity may excessively increase, undesirably decreasing the manufacturing efficiency and profitability. The viscosity of the polyamide-based resin may be measured by means of a conventional viscometer, such as a capillary viscosity or a vibration viscometer, using a typical solvent and method without additional limitation. For example, a polyamide-based resin is dissolved in 96 % sulfuric acid, and the relative viscosity may be determined from the ratio of the falling speed of the sulfuric acid and the polyamide resin solution.

T he polyamide based resin may include a polyamide-based resin, for example, nylon 6, nylon 66, nylon 46, nylon 11, nylon 12, nylon 610, nylon 612, a nylon 6/66 copolymer, a nylon 6/66/610 copolymer, nylon MXD6, nylon 6T, a nylon 6/6T copolymer, a nylon 66/PP copolymer and a nylon 66/PPS copolymer; or an N-alkoxyalkylate thereof, for example a methoxymethylate of 6-nylon, a methoxymethylate of 6-610-nylon or a methoxymethylate of 612-nylon. Particularly useful is nylon 6, nylon 66, nylon 46, nylon 11, nylon 12, nylon 610 or nylon 612.

Also, the film for a tire inner liner may further include an additive such as a heat-resistant antioxidant, a thermal stabilizer, an adhesion enhancer or a mixture thereof Specific examples of the heat-resistant antioxidant include N,N'-hexamethylene-bis-(3,5-di-tert-butyl-4-hydroxy-hydrocinnamamide) (e.g. commercially available products such as Irganox 1098, etc.), tetrakis[methylene(3,5-di-t-butyl-4-hydroxyhydrocinnamate)]methane (e.g. commercially available products such as Irganox 1010, etc.) or 4,4'-di-cumyl-di-phenyl-amine (e.g. Naugard 445). Specific examples of the thermal stabilizer include benzoic acid, triacetone diamine, or N,N'-bis(2,2,6,6-tetramethyl4-piperidyl)-1,3-benzonedicarboxamide. These additives are not limited to the above-listed examples, but any species known to be usable in the film for a tire inner liner may be used without particular limitation.

According to another embodiment of the invention, a method of manufacturing the film for a tire inner liner is provided, which includes polymerizing a polyamide-based resin or its precursor and 5∼50 wt% of a polyether-based resin relative to the total weight of the film thus preparing a copolymer, and melting and extruding the copolymer thus forming a film.

The present inventors manufactured a film for a tire inner liner by polymerizing the polyamide-based resin or its precursor with the polyether-based resin in a specific amount, thus preparing a copolymer which is then melted and extruded. Such a film for a tire inner liner may exhibit superior airtightness and high internal pressure retention performance despite being thin. Upon tire molding, even when a modest force is applied, this film may be easily elongated or deformed, advantageously showing superior moldability, which was experimentally proven and thus culminated in the present invention.

As mentioned above, in the film for a tire inner liner manufactured using the above method, a load generated upon 100 % elongation after heat treatment at 180°C for 10 min may be less than or equal to two times a load generated upon 100 % elongation at room temperature. Also the film for a tire inner liner obtained using the above method may generate a load of 0.5∼ 4 kgfupon 100 % elongation at room temperature, a load of 1∼5 kgf upon 200 % elongation at room temperature, and a load of 6 kgf or less upon 100 % elongation after heat treatment at 180 °C for 10 min. Furthermore, the film for a tire inner liner may have oxygen permeability of 200 cc/(m²·24 h·atm) or less.

Polymerizing the polyamide-based resin or its precursor with 5 ∼ 50 wt% of the polyether-based resin relative to the weight of the film may be performed under acidic conditions in a nitrogen environment. Also, such polymerization may include heating or melting at a temperature of 50°C or higher, and may include pressurization or depressurization depending on the type of reaction This polymerization may be conducted using a method and device typically used in synthesizing a polyamide-based resin without particular limitation.

The polyamide-based resin or its precursor may be appropriately selected depending on the specific kinds of polyamide-based segment of the copolymer. For example, in the case where the polyamide-based segment has a repeating unit of nylon 6, ε-caprolactam and adipic acid may be used as the polyamide-based resin precursor.

Specifically, the polyamide-based resin may include one or more polyamide-based resins selected from the group consisting of nylon 6, nylon 66, nylon 46, nylon 11, nylon 12, nylon 610, nylon 612, a nylon 6/66 copolymer, a nylon 6/66/610 copolymer, nylon MXD6, nylon 6T, a nylon 6/6T copolymer, a nylon 66/PP copolymer, a nylon 66/PPS copolymer, a methoxymethylate of 6-nylon, a methoxymethylate of 6-610-nylon and a methoxymethylate of 612-nylon. Also, the polyamide-based resin precursor may include a precursor of one selected from among the above-listed examples of the polyamide-based resin.

The polyether-based resin used in the above manufacturing method includes a polyalkylene glycol resin, or its derivative in which the terminal of the polyalkylene glycol resin is substituted with an amine group, a carboxylic group, an isocyanate group, etc. The polyether-based resin preferably includes polyethylene glycol, polypropylene glycol, polytetramethylene glycol, polyoxyethylene diamine, polyoxypropylene diamine, polyoxytetramethylene diamine, or copolymers thereof.

Specifically, the polyether-based resin may include a compound represented by Chemical Formula 6 below.

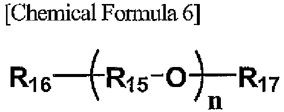

In Chemical Formula 6, R₁₅ may be a C1∼10 alkylene group, and n may be an integer between 1 and 100. Also, R₁₆ and R₁₇ may be the same as or different from each other, and may be individually hydrogen, a hydroxyl group, an amine group, a carboxylic group, or an isocyanate group.

As mentioned above, the polyether-based resin may have a weight average molecular weight of 500∼10,000, and preferably 1000∼3000.

The specific contents of the copolymer in the method of manufacturing the film for a tire inner liner, particularly, the polyamide-based segment and the polyether-based segment of the copolymer and the amounts thereof, specific properties or additional components, and the like, are as described above.

The temperature at which the copolymer is melted may be set to 230∼300°C, preferably 240∼280 °C. Although the melting temperature should be higher than the melting point of the polyamide-based resin, if it is too high, carbonization or decomposition may take place undesirably deteriorating the properties of the film, and furthermore, polyether-based resin bonding may occur or orientation may take place in a direction of the array of fibers, making it difficult to manufacture a non-stretched film.

The film for a tire inner liner may be a non-stretched film having a thickness of 30∼ 200 µm. The thickness of the extruded product may be adjusted depending on the size of a device such as an extruder, etc. Also, in order to form the non-stretched film, the melting extrusion temperature may be optimized and thus the viscosity of the melted product may be adjusted, the discharge of the melted product may be adjusted, the size of the die may be changed, or the winding speed of the film may be adjusted. For example, the lip opening of the die may be set to about 1 mm. The case where the lip opening is formed to be too narrow may excessively increase pressure applied to the front of the die, which is regarded as undesired. Also, the winding speed of the film should be appropriately maintained in order to prevent poor cooling and high orientation. For example, the winding speed is maximally inhibited, and may be set to 100 m/min or less, and preferably 50 m/min or less.

The method of manufacturing the film for a tire inner liner may further include forming an adhesive layer on at least one surface of the film, after forming the film via melting and extrusion. Such an adhesive layer may be formed by applying a resorcinol-formalin-latex (RFL)-based adhesive on one surface or both surfaces of the film using a typical process, and then drying it. As mentioned above, the adhesive layer may have a thickness of 20 *µ*m or less, and preferably, 0.1∼10 *µ*m.

The above coating process may be carried out using a typical coating process or device without particular limitation, and may include knife coating, bar coating, gravure coating, spraying, or dipping. Particularly useful is knife coating, gravure coating, or bar coating in terms of uniform application of the adhesive.

After forming the adhesive layer on one surface or both surfaces of the base film layer, drying and adhesive reaction may be performed at the same time, but drying and then heat treatment may be sequentially carried out in consideration of the reactivity of the adhesive. Also, to obtain a desired thickness of the adhesive layer or to apply a multistage adhesive, the adhesive layer formation, drying, and reaction may be repeated several times. Furthermore, the adhesive applied on the base film layer is thermally treated at 100∼150 °C for a period of time from about 30 s to 3 min and thus solidified and reacted.

As mentioned above, the film for a tire inner liner may further include the polyamide-based resin in order to enhance mechanical properties or airtightness. The specific contents for the additional polyamide-based resin are as described above.

Accordingly the method of manufacturing the film for a tire inner liner may further include mixing the copolymer resulting from polymerizing the polyamide-based resin or its precursor and 5∼50 wt% of the polyether-based resin relative to the total weight of the film with the polyamide-based resin, and melting and extruding the mixture at 230 ∼300 °C. The specific contents for the melting and extrusion are as described above, as are process steps subsequent to the melting and extrusion.

Meanwhile, forming the copolymer, or melting and extruding the copolymer, may include adding an additive such as a heat-resistant antioxidant or a thermal stabilizer. The specific contents for the above additive are as described above.

### ADVANTAGEOUS EFFECT OF THE INVENTION

According to the present invention, a film for a tire inner liner and a method of manufacturing the same can be provided, in which the film can exhibit superior airtightness even at a thin thickness, thus enabling lightness of a tire and an increase in vehicle fuel efficiency, and showing high moldability in a tire manufacturing process.

### BRIEF DESCRIPTION OF THE DRAWINGS

FIG. 1 schematically illustrates the configuration of a tire; and

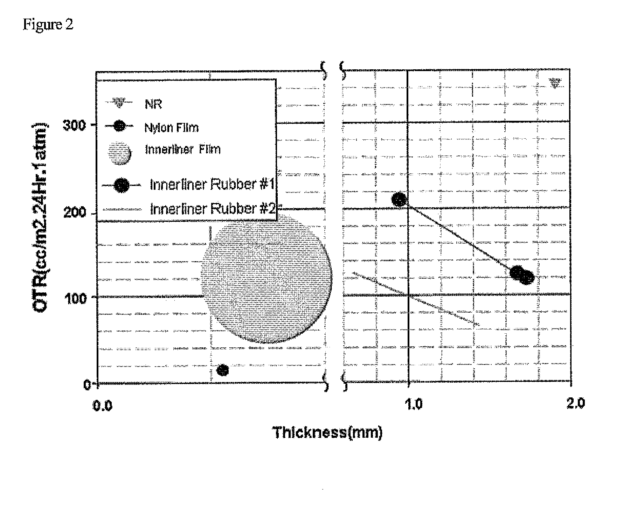

FIG. 2 schematically depicts air permeability depending on the material and thickness of inner liners.

### DETAILS FOR PRACTICING THE INVENTION

A better understanding of the present invention may be obtained through the following examples which are set forth to illustrate, but are not to be construed as limiting the present invention.

### <Example and Comparative Example: Manufacture of film for tire inner liner>

### Example 1

To polymerize a resin for an inner liner film, a mixture including 70 wt% of ε-caprolactam and 30 wt% of polyoxyethylene diamine (Mw. 1000) was mixed with adipic acid at the same mole number as in the polyoxyethylene diamine, and the resulting mixture was melted at 100 °C in a nitrogen environment for 30 min. The melted solution was heated at 250 °C for 3 h, pressurized up to 8 kg/cm², maintained at this pressure, and then depressurized to 1 kg/cm² for 1 h.

The depressurized melted product was manufactured into chips, after which the chips were extruded via a round die at 260°C, thus obtaining a 70 µm thick non-stretched film for a tire inner liner without performing stretching at a speed of 30 m/min and heat treatment.

On the film for an inner liner, a resorcinol-formalin-latex (RFL)-based adhesive was applied to a thickness of 5 µm using a gravure coater and dried at 150 °C for 1 min and reacted, thus forming an adhesive layer.

The thickness of the film for a tire inner liner was measured using a gauge tester. As such, the thickness of the film means a thickness of only the film excluding the adhesive layer.

### Example 2

A 70 µm thick non-stretched film for a tire inner liner was manufactured in the same manner as in Example 1, with the exception that 60 wt% of ε-caprolactam and 40 wt% of polyoxyethylene diamine were mixed.

### Example 3

A 70 µm thick non-stretched film for a tire inner liner was manufactured in the same manner as in Example 1, with the exception that 80 wt% of ε-caprolactam and 20 wt% of polyoxyethylene diamine were mixed.

### Example 4

A non-stretched film for a tire inner liner was manufactured in the same manner as in Example 1, with the exception that the thickness, of the above film was 50 µm.

### Example 5

A non-stretched film for a tire inner liner was manufactured in the same manner as in Example 1, with the exception that the thickness of the above film was 150 µm.

### Example 6

To polymerize a resin for an inner liner film, a mixture including 70 wt% of ε-caprolactam and 30 wt% of polyoxyethylene diamine (Mw.1000) was mixed with adipic acid at the same mole number as in the polyoxyethylene diamine, and the resulting mixture was melted at 100 °C in a nitrogen environment for 30 min. The melted solution was heated at 250 °C for 3 h, pressurized up to 8 kg/cm², maintained at this pressure, and then depressurized to 1 kg cm² for 1 h.

The decompressed melted product was manufactured into chips, after which the chips were mixed with a nylon 6 resin having a relative viscosity of 3.4 at a weight ratio of 1:1. The resulting mixture was extruded via a round die at 260 °C, thus obtaining a 70 µm thick non-stretched film for a tire inner liner without performing stretching at a speed of 30 m/min and heat treatment.

On the film for an inner liner, a resorcinol-formalin-latex (RFL)-based adhesive was applied to a thickness of 5 µm using a gravure coater and dried at 150 °C for 1 min and reacted, thus forming an adhesive layer.

The thickness of the film for a tire inner liner was measured using a gauge tester.

### Example 7

To polymerize a resin for an inner liner film, a mixture including 70 wt% of ε-caprolactam and 30 wt% of polyoxyethylene diamine (Mw.1000) was mixed with adipic acid at the same mole number as in the polyoxyethylene diamine, and the resulting mixture was melted at 100 °C in a nitrogen environment for 30 min. The melted solution was heated at 250 °C for 3 h, pressurized up to 8 kg/cm², maintained at this pressure, and then depressurized to 1 kg/cm² for 1 h.

The decompressed melted product was manufactured into chips, after which the chips were extruded via a round die at 260 °C, thus obtaining a 100 µm thick non-stretched film for a tire inner liner without performing stretching at a speed of 30 m/min and heat treatment.

On the film for an inner liner, a resorcinol-formalin-latex (RFL)-based adhesive was applied to a thickness of 15 nm using a gravure coater and dried at 150 °C for 1 min and reacted, thus forming an adhesive layer.

The thickness of the film for a tire inner liner was measured using a gauge tester. As such, the thickness of the film means a thickness of only the film excluding the adhesive layer.

### Example 8

A 100 µm thick non-stretched film for a tire inner liner was manufactured in the same manner as in Example 1, with the exception that 60 wt% of ε-caprolactam and 40 wt% of polyoxyethylene diamine were mixed.

### Example 9

A 100 µm thick non-stretched film for a tire inner liner was manufactured in the same manner as in Example 1, with the exception that 80 wt% of ε-caprolactam and 20 wt% of polyoxyethylene diamine were mixed.

### Example 10

A 100 µm thick non-stretched film for a tire inner liner was manufactured in the same manner as in Example 1, with the exception that 90 wt% of ε-caprolactam and 10 wt% of polyoxyethylene diamine were mixed.

### Example 11

A non-stretched film for a tire inner liner was manufactured in the same manner as in Example 1, with the exception that the thickness of the above film was 50 µm.

### <Comparative Example>

### Comparative Example 1

A 70 µm thick non-stretched film for a tire inner liner was manufactured in the same manner as in Example 1, with the exception that 97 wt% of ε-caprolactam and 3 wt% of polyoxyethylene diamine were mixed.

### Comparative Example 2

A 70 µm thick non-stretched film for a tire inner liner was manufactured in the same manner as in Example 1, with the exception that 30 wt% of ε-caprolactam and 70 wt% of polyoxyethylene diamine were mixed.

### Comparative Example 3

A 70 µm thick non-stretched film for a tire inner liner was manufactured in the same manner as in Example 1, with the exception that only a nylon 6 resin having a relative viscosity of 3.4 was used

### Comparative Example 4

Butyl rubber was mixed with a releasing agent and a processing agent, and then refined thus forming a 70 µm thick film for a tire inner liner, on which adhesive rubber (Taigum) was then formed.

### Comparative Example 5

A non-stretched film for a tire inner liner was manufactured in the same manner as in Example 1, with the exception that the thickness of the above film was 20 µm.

### Comparative Example 6

A non-stretched film for a tire inner liner was manufactured in the same manner as in Example 1, with the exception that the thickness of the above film was 350 µm.

### Comparative Example 7

The chips of Example 1 were attempted to be manufactured into a film for a tire inner liner via extrusion using a round die at 310 °C. However, the melting viscosity of the film was remarkably decreased due to high temperature, making it impossible to form a film, and the soft segment having low melting viscosity was carbonized, ultimately failing to manufacture a desired product.

### Comparative Example 8

A 100 µm thick non-stretched film for a tire inner liner was manufactured in the same manner as in Example 7, with the exception that 97 wt% of ε-caprolactam and 3 wt% of polyoxyethylene diamine were mixed.

### Comparative Example 9

A 100 µm thick non-stretched film for a tire inner liner was manufactured in the same manner as in Example 7, with the exception that 30 wt% of ε-caprolactam and 70 wt% of polyoxyethylene diamine were mixed.

### Comparative Example 10

A 100 µm thick non-stretched film for a tire inner liner was manufactured in the same manner as in Example 7, with the exception that only a nylon 6 resin having a relative viscosity of 3.4 was used.

### <Test Example>

### Test Example 1. Oxygen permeability test

The oxygen permeability of the films of the examples and comparative examples was measured via the following method.

### [Measurement method and conditions]

According to ASTM D 3895, oxygen permeability was measured under conditions of 25 °C and 60 RH% using an oxygen permeation analyzer (Model 8000, available from Illinois Instruments).

### Test Example 2. Measurement of load generated upon elongation of film for tire inner liner under specific conditions

### 1. Measurement of load generated upon elongation at room temperature

When the film for a tire inner liner of the examples and comparative examples was 100 % elongated in the MD (machine direction) at room temperature, the generated load (at specific elongation) was measured. Also, when the film for a tire inner liner of Examples 1 to 6 and Comparative Examples 1 to 6 was 200 % elongated in MD at room temperature, the generated load (at specific elongation) was measured.

A specific measurement method is as follows.
(1) Measurement device: universal testing machine (Model 4204, available from Instron)
(2) Measurement conditions: 1) head speed 300 mm/min, 2) grip distance (sample length) 100 mm, 3) sample width 10 mm, 4) 25 °C and 60 RH%
(3) Five measurements were performed and an average value was determined.

### 2. Measurement of load generated upon 100 % elongation after heat treatment at 180 °C for 10 min

The film for a tire inner liner of Examples 7 to 11 and Comparative Examples 7 to 9 was heat treated in a hot air oven at 180 °C for 10 min and then cooled to room temperature. Subsequently, when the film was 100 % elongated in MD at room temperature, the generated maximum load (at specific elongation) was measured. The concrete measurement procedures are as in '1' mentioned above.

The results of Test Examples 1 and 2 are given in Tables 1 and 2 below.

**[Table 1] Results of Test Examples 1 and 2 using Examples 1 to 6 and Comparative Examples 1 to 6**

| | Air permeability [cc/m² * 24 h * atm] | Inner liner thickness [µm] | Load generated upon 1.00 % elongation at RT [kgf] | Load generated upon 200 % elongation at RT [kgf] |
|---|---|---|---|---|
| Ex.1 | 114 | 70 | 1.6 | 2.1 |
| Ex.2 | 160 | 70 | 1.4 | 1.8 |
| Ex.3 | 95 | 70 | 2.4 | 3.3 |
| Ex.4 | 141 | 70 | 1.5 | 1.9 |
| Ex.5 | 63 | 50 | 3.5 | 4.1 |
| Ex.6 | 75 | 150 | 2.5 | 3.7 |
| Comp.Ex.1 | 46 | 70 | 4.4 | 6.4 |
| Comp.Ex.2 | 472 | 70 | 1.3 | 1.6 |
| Comp.Ex.3 | 44 | 70 | 4.5 | 6.8 |
| Comp.Ex.4 | 725 | 70 | 0.8 | 0.9 |
| Comp.Ex.5 | Impossible to manufacture film | 20 | - | - |
| Comp.Ex.6 | 35 | 350 | 6.2 | 8.3 |

As is apparent from Table 1, the tire inner liners of Examples 1 to 6 exhibited air permeability of 170 cc/(m² · 24 h · atm) or less even at a thickness of 150 µm or less, thus achieving superior airtightness. Also, the tire inner liners of Examples 1 to 6 generated a load of 4 kgf or less upon 100 % elongation at room temperature, and generated a load of 5 kgf or less upon 200 % elongation. Thus upon tire molding, even when a modest force is applied, the film can be easily elongated or deformed, thus exhibiting superior moldability. Furthermore, the properties may be maintained to be stable even under severe deformation during tire molding or vehicle service.

However, when the films of Comparative Examples 1 to 6 had the same thickness as those of the above examples, they exhibited very high air permeability or generated a load greater than 4 or 6 kgf upon 100 % or 200 % elongation.

**[Table 2] Results of Test Examples 1 and 2 using Examples 7 to 11 and Comparative Examples 7 to 9**

| | Air permeability [cc/m² *24 * atm] | Inner liner thickness [µm] | Load (A) generated upon 100 % elongation at RT [kgf] | Load (B) generated upon 100 % elongation after heat treatment at 180 °C for 10 min [kgf] | B/A |
|---|---|---|---|---|---|
| Ex. 7 | 108 | 100 | 1.88 | 3.22 | 1.713 |
| Ex. 8 | 142 | 100 | 1.84 | 2.85 | 1.549 |
| Ex.9 | 90 | 100 | 2.28 | 4.11 | 1.803 |
| Ex.10 | 85 | 100 | 2.45 | 4.85 | 1.980 |
| Ex.11 | 141 | 50 | 1.62 | 2.55 | 1.574 |
| Comp. Ex. 7 | 57 | 100 | 3.80 | 7.85 | 2.066 |
| Comp. Ex. 8 | 450 | 100 | 1.38 | 2.25 | 1.630 |
| Comp. Ex.. | 35 | 100 | 3.60 | 9.08 | 2.522 |

As is apparent from Table 2, the tire inner liners of Examples 7 to 11 exhibited air permeability of 200 cc/(m² · 24 h · atm) or less even at a thickness of 150 µm or less, thus achieving superior airtightness.

Also, the tire inner liners of Examples 7 to 11 generated a load of 3 kgf or less upon 100 % elongation at room temperature, and generated a load of 6 kgf or less upon 100 % elongation after heat treatment at 180 °C for 10 mm. Accordingly, the load generated upon 100 % elongation after heat treatment at 180 °C for 10 min was confirmed to be less than or equal to two times the load generated upon 100 % elongation at room temperature. Thus even when a modest force is applied upon tire molding, the film can be easily elongated or deformed, thus maintaining stable properties even after heat treatment, resulting in high moldability. Moreover, the properties can be maintained to be stable even under severe deformation during tire molding or vehicle service.

However, when the films of Comparative Examples 7 to 9 had the same thickness as those of the above examples, they exhibited very high air permeability or generated a much greater load upon 100 % elongation at room temperature or upon 100 % elongation after heat treatment, compared to the examples. The load generated upon 100 % elongation after heat treatment at 180 °C for 10 min was seen to be greater than two times the load generated upon 100 % elongation at room temperature.

### Test Example 3. Measurement of molding feasibility

The film for a tire inner liner of the examples and comparative examples was applied so as to suit 205R/65R16 to thereby manufacture a tire. In the tire manufacturing process, manufacturing feasibility and outer appearance of the produced green tire were evaluated, and final appearance of a tire after vulcanization was inspected.

The case where the green tire or the vulcanized tire had no distortion and a standard deviation of a diameter was within 5 % is evaluated by 'good'. The case where the green tire or the vulcanized tire was distorted and thus the tire was not properly manufactured, or the tire inner liner was melted or torn and thus broken, or a standard deviation of a diameter was greater than 5 %, is evaluated as 'poor appearance'.

### Test Example 4. Measurement of interval pressure retention performance

The internal pressure retention (IPR) of the tire of Test Example 3 was measured under conditions of 21 °C and 101.3 kPa for 90 days using ASTM F1112-06.

The results of Test Examples 3 and 4 are given in Table 3 below.

**[Table 3] Results of Test Examples 3 and 4**

| | Manufactured green tire state | Final tire state | IPR (%) |
|---|---|---|---|
| Ex.1 | good | good | 2.6 |
| Ex.2 | good | good | 3.0 |
| Ex. 3 | good | good | 2.4 |
| Ex.4 | good | good | 2.8 |
| Ex.5 | good | good | 1.9 |
| Ex. 6 | good | good | 2.2 |
| Ex.7 | good | good | 2.6 |
| Ex.8 | good | good | 3.0 |
| Ex.9 | good | good | 2.4 |
| Ex.10 | good | good | 2.8 |
| Ex.11 | good | good | 1.9 |
| Comp. Ex. 1 | poor appearance | - | - |
| Comp. Ex. 2 | poor appearance | - | - |
| Comp. Ex. 3 | poor appearance | - | - |
| Comp. Ex. 4 | good | good | 17 |
| Comp. Ex. 5 | impossible to manufacture film | | |
| Comp. Ex. 6 | poor appearance | poor appearance | - |
| Comp. Ex. 7 | poor appearance | poor appearance | - |
| Comp. Ex. 8 | good | good | 8.8 |
| Comp. Ex. 9 | poor appearance | poor appearance | - |

As is apparent from Table 3, when the films of the examples were used, even if the expansion pressure was applied in the tire manufacturing process, stretching could sufficiently occur, thereby obtaining good green tires. Also when the tire inner liners of the examples were applied, final tire products having high quality without defects could be provided.

However, in cases where the amount of the polyether-based segment was different from the examples (Comparative Examples 1, 2, 7, and 8), or the polyamide-based resin or butyl rubber was used alone (Comparative Examples 3, 4, and 9), or the film for an inner liner was too thin or thick (Comparative Examples 5 and 6), air permeability was excessively high, or the load generated upon initial elongation was very large. Even when expansion pressure was applied, sufficient stretching did not take place, undesirably obtaining green tires having poor appearance or torn inner liner films or making it impossible to manufacture a film.

As shown in the results of Test Example 4, the internal pressure retention of the tire manufactured using the film for a tire inner liner of the examples was measured under conditions of 21 °C and 101.3 kPa for 90 days according to ASTM F1112-06. Consequently, the internal pressure reduction thereof was maintained to the extent of less than 5 %, thereby preventing higher fuel consumption and rollover accidents due to low internal pressure.

### <Description of the Reference Numerals in the Drawings>

1. tread
2. shoulder
3. sidewall
4. cap ply
5. belt
6. body ply
7. inner liner
8. apex
9. bead

## Claims

1. A film for a tire inner liner, comprising
a copolymer comprising a polyamide-based segment and 5 ∼ 50 wt% of a polyether-based segment relative to a total weight of the film, and
having a thickness of 30 ∼ 300 *µ*m.

2. The film for a tire inner liner of claim 1, wherein a load generated upon 100 % elongation at room temperature is 0.5 ∼ 4 kgf.

3. The film for a tire inner liner of claim 1, wherein a load generated upon 200 % elongation at room temperature is 1 ∼ 5 kgf.

4. The film for a tire inner liner of claim 1, wherein a load generated upon 100 % elongation after heat treatment at 180 °C for 10 min is less than or equal to two times a load generated upon 100 % elongation at room temperature.

5. The film for a tire inner liner of claim 1, wherein a load generated upon 100 % elongation after heat treatment at 180 °C for 10 min is 6 kgf or less.

6. The film for a tire inner liner of claim 1, wherein a base of the film consists essentially of the copolymer.

7. The film for a tire inner liner of claim 1, wherein the polyamide-based segment includes a repeating unit of any one polyamide-based resin selected from the group consisting of nylon 6, nylon 66, nylon 46, nylon 11, nylon 12, nylon 610, nylon 612, a nylon 6/66 copolymer, a nylon 6/66/610 copolymer, nylon MXD6, nylon 6T, a nylon 6/6T copolymer, a nylon 66/PP copolymer, a nylon 66/PPS copolymer, a methoxymethylate of 6-nylon, a methoxymethylate of 6-610-nylon, and a methoxymethylate of 612-nylon.

8. The film for a tire inner liner of claim 1, wherein the polyamide based segment includes a repeating unit represented by Chemical Formula 1 or 2 below: 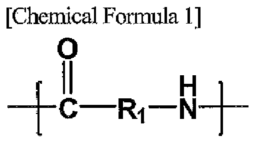 wherein R₁ is a C1∼20 linear or branched alkylene group or a C7∼20 liner or branched arylalkylene group; and 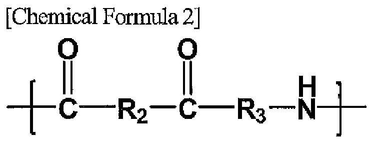 wherein R₂ is a C1∼20 linear or branched alkylene group, and R₃ is a C1∼20 linear or branched alkylene group or a C7∼20 liner or branched arylalkylene group.

9. The film for a tire inner liner of claim 1, wherein the polyether-based segment includes a repeating unit represented by Chemical Formula 5 below: 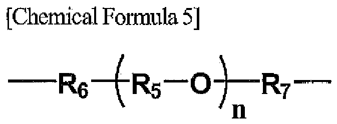 wherein R₅ is a C1∼10 alkylene group, n is an integer between 1 and 100, and R₆ and R₇ which are same as or different from each other are individually a direct bond, -O-, -NH-, - COO-, or -CONH-.

10. The film for a tire inner liner of claim 1, wherein the polyether-based segment includes a repeating unit of any one polyether-based resin selected from the group consisting of polyethylene glycol, polypropylene glycol, polytetramethylene glycol, polyoxyethylene diamine, polyoxypropylene diamine, polyoxytetramethylene diamine, and copolymers thereof.

11. The film for a tire inner liner of claim 1, which is a non-stretched film.

12. The film for a tire inner liner of claim 1, which has an oxygen permeability of 200 cc/(m² · 24 h · atm) or less.

13. The film for a tire inner liner of claim 1, further comprising an adhesive layer formed on at least one surface of the film using a resorcinol-formalin-latex (RFL)-based adhesive.

14. The film for a tire inner liner of claim 1, further comprising a polyamide-based resin.

15. The film for a tire inner liner of claim 1, further comprising at least one adhesive selected from the group consisting of a heat-resistant antioxidant and a thermal stabilizer.

16. A method of manufacturing a film for a tire inner liner, comprising:
polymerizing a polyamide-based resin or its precursor with 5∼50 wt% of a polyether-based resin relative to a total weight of the film, thus preparing a copolymer; and
melting and extruding the copolymer, thus forming a film.

17. The method of claim 16, wherein the film is a non-stretched film having a thickness of 30∼300 µm.

18. The method of claim 16, further comprising forming an adhesive layer on at least one surface of the film using a resorcinol-formalin-latex (RFL)-based adhesive, after melting and extruding.

19. The method of claim 14, further comprising mixing the copolymer with a polyamide-based resin to prepare a mixture, and melting and extruding the mixture at 230 ∼ 300 °C.
